(19) Europäisches Patentamt
European Patent Office
Office européen des brevets

(11) **EP 3 165 980 B1**

(12) **EUROPÄISCHE PATENTSCHRIFT**

(45) Veröffentlichungstag und Bekanntmachung des Hinweises auf die Patenterteilung:
**01.01.2020** **Patentblatt 2020/01**

(51) Int Cl.:
**G05B 23/02** *(2006.01)*

(21) Anmeldenummer: **16195398.9**

(22) Anmeldetag: **25.10.2016**

(54) **PROZESSÜBERWACHUNG**

PROCESS MONITORING

SURVEILLANCE DE PROCESSUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2015 DE 102015119152**

(43) Veröffentlichungstag der Anmeldung:
**10.05.2017 Patentblatt 2017/19**

(73) Patentinhaber: **Fibro GmbH**
**74855 Hassmersheim (DE)**

(72) Erfinder: **Schröder, Stefan**
**78183 Hüfingen-Sumpfohren (DE)**

(74) Vertreter: **Staeger & Sperling**
**Partnerschaftsgesellschaft mbB**
**Sonnenstraße 19**
**80331 München (DE)**

(56) Entgegenhaltungen:
**EP-A2- 1 276 027**

• **"NIST/SEMATECH e-Handbook of Statistical Methods", , 20. Dezember 2014 (2014-12-20), XP002767789, Gefunden im Internet: URL:https://web.archive.org/web/2014122013 3240/http://www.itl.nist.gov/div898/handbo ok/pmc/section3/pmc31.htm [gefunden am 2017-03-02]**

• **DU R ET AL: "AUTOMATED MONITORING OF MANUFACTURING PROCESSES, PART 1: MONITORING METHODS", TRANSACTIONS OF THE AMERICAN SOCIETY OF MECHANICAL ENGINEERS,SERIES B: JOURNAL OF ENGINEERING FOR INDUSTRY, ASME. NEW YORK, US, Bd. 117, Nr. 2, 1. Mai 1995 (1995-05-01), Seiten 121-132, XP000521507, ISSN: 0022-0817**

**Beschreibung**

Die Erfindung betrifft ein Verfahren zur Prozessüberwachung sowie eine drehende Vorrichtung zur Erzeugung einer drehenden Bearbeitung wie zum Beispiel zur Erzeugung einer Bohrung in einem Werkstück oder eines Gewindes in einer Bohrung eines Werkstücks gemäß den Merkmalen von Anspruch 1.

Bei der industriellen Herstellung von Bauteilen, insbesondere in Fertigungslinien, werden regelmäßig in oder an den zu bearbeitenden Werkstücken drehende Bearbeitungen vorgenommen, wie zum Beispiel dass Löcher gebohrt oder eingestanzt und in einem nachfolgenden Bearbeitungsschritt mit einem Gewinde versehen werden. Zur Erzeugung des Gewindes werden sogenannte Gewindeformeinheiten oder Gewindeschneider verwendet. Nachfolgend wird der Einfachheit halber der Begriff "Gewindeformeinheit" einheitlich verwendet.

Da sich die Erfindung für alle Arten von drehender Bearbeitung anwenden lässt, wird im allgemeinen Teil der Beschreibung der Erfindung von einer drehend antreibbaren Bearbeitungsvorrichtung gesprochen. Im Folgenden wird die Erfindung aber an dem Beispiel der Erzeugung eines Gewindes näher erläutert.

Zur Erzeugung eines Gewindes wird ein Gewindeformkopf verwendet, in welchem ein drehend antreibbarer Gewindeformer gelagert ist. Der Gewindeformer wird an der zuvor gebohrten oder gestanzten Bohrung passend angesetzt und bewegt sich drehend in diese Bohrung, wobei das Gewinde durch Materialverdrängung geformt oder durch Materialabtrag geschnitten wird.

Typischerweise werden zum Antrieb geeignete Antriebsmotoren, insbesondere Elektromotoren verwendet. Speziell bei dem Einsatz von EC-Motoren oder BLDC-Motoren lässt sich die Erfindung besonders vorteilhaft anwenden.

Es ist auch bekannt, bei der automatischen Teilefertigung, bei welcher Pressen zum Umformen, Stanzen und Schneiden der Werkstücke verwendet werden, die Presse mit ihrem Hubantrieb auch für den Antrieb des Gewindeformkopfes zu verwenden. Dabei wird die oszillierende, insbesondere die lineare, Bewegung eines Oberteils der Presse gegenüber einem statischen Unterteil der Presse in eine rotatorische Bewegung für den Antrieb des Gewindeformkopfs, d. h. des Gewindeformers umgesetzt.

Die DE 10 2008 047 073 offenbart eine solche Vorrichtung zur Erzeugung einer Bohrung in einem Werkstück oder eines Gewindes in einer Bohrung eines Werkstückes, die ein statisches Unterteil und einen gegen dieses oszillierend bewegbares Oberteil aufweist, mit einem drehend antreibbaren Bohrungs- oder Gewindeformer, und mit einer Vorrichtung zur Übertragung der oszillierenden bewegung des Oberteils in eine rotatorische Bewegung wenigstens einer Antriebswelle der Antriebseinheit.

Aus der DE 102013108170 B3 ist eine Vorrichtung zur Erzeugung einer Bohrung in einem Werkstück oder eines Gewindes in einer Bohrung eines Werkstückes bekannt, die ein statisches Unterteil und ein gegen dieses oszillierend bewegbares Oberteil aufweist, mit einem drehend antreibbaren Bohrungs- oder Gewindeformer, mit einer Antriebseinheit für den Bohrungs- oder Gewindeformer und mit einer Vorrichtung zur Übertragung der oszillierenden Bewegung des Oberteils in eine rotatorische Bewegung wenigstens einer Antriebswelle der Antriebseinheit zeichnet sich dadurch aus, dass die Vorrichtung zur Übertragung der oszillierenden Bewegung des Oberteils in eine rotatorische Bewegung wenigstens einer Antriebswelle der Antriebseinheit mit einer ersten Antriebswelle der Antriebseinheit, welche eine erste Achse aufweist, und mit wenigstens einer zweiten Antriebswelle, welche eine dritte Achse aufweist, gekoppelt ist und dass die wenigstens zwei Antriebswellen eine gemeinsame Abtriebswelle antreiben, wobei der Bohrungs- und Gewindeformer mit der Abtriebswelle der Antriebeinheit gekoppelt ist, und wobei Mittel zum Ausgleich von Fertigungs- oder Montagetoleranzen vorhanden sind. Damit jedoch die Bewegungen der wenigstens zwei Antriebswellen miteinander synchronisiert werden können, sind Mittel zum Ausgleich der Fertigungs- oder Montagetoleranzen, insbesondere zum Ausgleich der Fertigungs- oder Montagetoleranzen der beiden Antriebswellen oder der beiden Antriebsstränge, vorgesehen. Vorzugsweise weist die Vorrichtung zur Übertragung der oszillierenden Bewegung des Oberteils in eine rotatorische Bewegung wenigstens einer Antriebswelle der Antriebseinheit wenigstens eine erste Zahnstange auf, in welche wenigstens ein erstes Ritzel eingreift, und wenigstens eine zweite Zahnstange, in welche wenigstens ein zweites Ritzel eingreift, auf, wobei die Zahnstangen und die Antriebseinheit durch die oszillierende Bewegung des Oberteils gegeneinander bewegbar sind, und wobei das erste Ritzel mit der ersten Antriebswelle der Antriebseinheit und das zweite Ritzel mit der zweiten Antriebswelle der Antriebseinheit gekoppelt ist EP 1 276 027 zeigt ein Verfahren zum Überwachen einer Werkzeugmaschine. Die zuvor genannten und im Stand der Technik bekannten Lösungen beschäftigen sich hauptsächlich mit der Umsetzung des Antriebes von z. B. einer linearen Hubbewegung in eine drehende Bewegung.

Andere bekannte Verfahren nutzen unmittelbar einen drehenden Direktantrieb. Bei den bekannten Vorrichtungen stellt sich aber regelmäßig das Problem, dass besondere Sicherheitsmaßnahmen für mögliche Fertigunsgfehler erforderlich sind. Sicherheitsmaßnahmen müssen zum Beispiel für solche Fälle getroffen werden, bei denen die Gewindeformeinheit beschädigt ist, das Werkstück aufgrund eines Fertigungsfehlers nicht das zu bearbeitende Kernloch aufweist, Materialfehler vorliegen oder aber die Positionierung des Werkstücks in Bezug auf die Vorrichtung nicht exakt erfolgt ist, so dass das Gewindeformwerkzeug bei einsetzendem Vorschub auf das Werkstück auftrifft (sozusagen auf Block fährt) und ein weiterer Vorschub demzufolge nicht möglich ist.

Um einerseits Beschädigungen des Gewindeformwerkzeugs bzw. der Vorrichtung zu vermeiden oder bei gebrochenem Werkzeug die nicht erzeugten Gewinde detektieren zu können, wurden bislang aufwendige Überwachungssysteme installiert, die das Vorhandensein und die exakte Positionierung des Kernlochs überwachen und gegebenenfalls auf die Vorrichtung bzw. deren Steuerung einwirken. Nachteilig hierbei ist der hohe Aufwand, der für die Installation und insbesondere auch die Justierung und Programmierung eines solches Monitoring-Systems erforderlich ist.

Aus der DE 197 29 263 A1 ist eine Lösung bekannt, bei der der Vorschub der Arbeitswelle, die die Werkzeugaufnahme, und damit das Gewindeformwerkzeug antreibt, über eine Spindel realisiert ist, die mit einer Leitmutter zusammenwirkt. Die Besonderheit besteht darin, die Leitmutter zwar verdrehfest im Aufnahmekörper festzulegen, jedoch eine Axialverschiebung als Ausweichbewegung für den Fall zuzulassen, dass die vorgesehene Axialverschiebung der Arbeitswelle (Vorschub) nicht möglich sein sollte.

Konkret gelingt dies dadurch, dass die Spindel mit der Arbeitswelle verdrehfest verbunden ist, beispielsweise an der der Werkzeugaufnahme gegenüberliegenden Stirnseite. Weiterhin ist die Leitmutter im Aufnahmekörper axial verschiebbar gegen die Wirkung einer Feder zwischen einer ersten Position, der Arbeitsposition, und einer zweiten Position, der Abschaltposition, gelagert.

Solche mechanische Lösungen sind aufwändig zu realisieren und nicht ohne weiteres auf eine Vielzahl von Anwendungen adaptierbar.

Bei Systemen die bisher am Markt erhältlich sind, ist die Prozesssicherheit häufig nur unzureichend gegeben. Insbesondere bei Anwendungen, bei denen ein Stanzprozess im gleichen Werkzeug (z. B. einer Presse) vorausgeht ist es erforderlich, den Folgeprozess des Gewindeformens zu evaluieren. D.h. wenn während des Stanzprozesses das erzeugte Kernloch für ein Gewinde zu klein oder zu groß ist, wenn während dem Gewindeformprozess das Gewindeformwerkzeug bricht oder das Gewindeformwerkzeug verschlissen ist oder andere Störungen, wie Materialfehler oder Positionsfehler vorliegen, wurde dies nicht oder nicht rechtzeitig erkannt. In manchen Fällen wurden treuere Teile produziert, die kein oder ein schadhaftes Gewinde aufwiesen. Dadurch entstanden sehr hohe Kosten für den Betreiber durch Nacharbeit und Endkontrolle oder durch Werkzeugschäden die durch abgebrochene Formwerkzeuge hervorgerufen wurden.

Die Aufgabe der vorliegenden Erfindung besteht darin, vorbesagte Nachteile zu überwinden und ein Verfahren zur Prozessüberwachung sowie eine Vorrichtung zur Erzeugung einer drehenden Werkstückbearbeitung bereitzustellen, welche eine verbesserte Leistungsfähigkeit aufweist, zuverlässig in der Detektion von negativen Fertigungseinflüssen und kostengünstig realisierbar ist. Besonders vorteilhaft ist eine Lösung, welche vorhandene Steuerungskomponenten nutzt oder zu mindestens teilweise mit verwenden kann, um Störungen am Bearbeitungswerkzeug feststellen zu können.

Diese Aufgabe wird gelöst durch ein Verfahren mit den Merkmalen von Anspruch 1.

Grundgedanke der vorliegenden Erfindung ist es, die Prozessüberwachung eines drehenden Bearbeitungswerkzeugs über eine mittels Stromaufnahme ermittelte Drehmomentüberwachung eines Elektromotors z. B. eines Servomotors und deren Ermittlung über den Mittelwert und über Standardabweichung durchzuführen. Im Folgenden wird der Grundgedanke anhand eines drehbaren Gewindeformers näher erläutert.

Bevorzugt wird dies durch eine softwareimplementierte Programmierlösung realisiert, die mittels der Stromaufnahme des Motors in der Lage ist, die erforderlichen Drehmomente für jedes zu Gewinde auszuwerten. Die Gewindeformeinheit wird im so bezeichneten "Teach-Modus" eingerichtet. Währen des Teach-Modus werden die über eine Erfassungseinrichtung ermittelten Stromwerte des Motors aufgezeichnet. Diese Stromwerte werden nach einer ausreichend aufgezeichneten Anzahl an Daten für die Stromwerte zu einer Steuerung (Motorsteuerung) übertragen. Als Steuerung kann zum Beispiel eine SPS vorgesehen werden, an die die aufgezeichneten Daten übertragen und vorzugsweise dort in einer geeigneten Speicherform gespeichert werden. Auf diese Weise entsteht eine Drehmomentenverlaufskurve, die für die Prozessüberwachung verwendet wird. Über die Drehmomentenverlaufskurve wird mittels eines definierten Werts für die Standardabweichung $\sigma$ "Sigma" eine Hüllkurve gelegt. Der Parameter Sigma ist ein Maß für die Breite der Grenzen der Hüllkurve in einem bestimmten Abstand zum Mittelwert. So bezeichnet zum Beispiel 5 Sigma die Abweichung +/- 5. Standardabweichung, damit ist die Streuung der Messwerte am jeweiligen Messpunkt definiert. die zulässige Abweichung vorzugsweise symmetrisch nach oben und unten mit einer Abweichung von $\mu$ + /- n·$\sigma$ bestimmt wird, wobei $\mu$ der Mittelwert darstellt und $\sigma$ die Standardabweichung. Die Hüllkurve zeigt den zulässigen Sollwertbereich $I_{soll}$, der ermittelt wurde indem eine Vielzahl N von Stromaufnahmen $I_{Ist}$ an einem repräsentativen Bauteil erfasst und der Mittelwert $\mu = I_M$ daraus ermittelt wird, sowie eine bauteilspezifische Standardabweichung $\sigma$ für die Stromgrenzen ermittelt wird, wobei eine Obergrenze und Untergenze ($I_{soll}$) für die Stromgrenzen wir folgt ermittelt wird:

$$I_{max} = \mu + n \cdot \sigma$$

$$I_{min} = \mu - n \cdot \sigma$$

Für jeden Messpunkt werden die somit die Stromgrenzen erfasst:

Mittelwert + n * Standardabweichung ($\sigma$) und

Mittelwert - n * Standardabweichung (σ) und an die Steuerung bzw. den Umrichter übertragen.

Im Intervall der Abweichung ±1σ vom Mittelwert sind 68,27 % aller Messwerte zu finden. Im Intervall der Abweichung ±2σ vom Mittelwert sind 95,45 % aller Messwerte zu finden und im Intervall der Abweichung ±3σ vom Mittelwert sind 99,73 % aller Messwerte zu finden. Die Steuerung oder der Umrichter überwacht im Automatikbetrieb die Einhaltung der Stromgrenzen und löst ggf. ein Stopp aus.

Im regulären Automatikmodus der Gewindeformeinheit wird bevorzugt bei jeder Überschreitung oder Unterschreitung der Messwerte außerhalb der Grenzen ein Fehlerzähler um den Wert "1" erhöht. Wenn die in der Software der Steuerung auswählbare Anzahl zulässiger Abweichungen überschritten wird, wird das Abschalten der Gewindeformeinheit initiiert.

Erfindungsgemäß wird daher ein Verfahren zur Prozessüberwachung einer über einen Elektromotor antreibbaren drehenden Bearbeitungseinheit mit den folgenden Schritten vorgeschlagen:

a. Erfassen der zur Drehmomenterzeugung korrespondierende Stromaufnahme ($I_{Ist}$) (Ist-Werte) des Elektromotors mittels wenigstens eines Erfassungsmoduls;

b. Vergleichen des erfassten Ist-Wertes ($I_{Ist}$) mit (vorzugsweise in einer Steuerung) gespeicherten Soll-Werten ($I_{min}$, $I_{max}$) eines Sollwertbereiches ($I_{soll}$);

c. Feststellen ob der Ist-Wert ($I_{Ist}$) der Stromaufnahme ein zulässiger Wert aus dem Sollwertbereich ($I_{soll}$) ist und

d. Ausgabe eines Signals wenn eine Abweichung des Ist-Wert ($I_{Ist}$) festgestellt wird, um dadurch eine Drehmomentabweichung des drehenden Bearbeitungswerkzeuges zu detektieren.

In einer bevorzugten Ausführungsform der Erfindung ist vorgesehen, dass das drehende Bearbeitungswerkzeug eine Gewindeformeinheit ist. Weiter Vorteilhaft ist es, wenn bei einer Abweichung ein entsprechendes Signal S in Schritt d) an einen Fehlerzähler übertragen wird und ggf. bei Überschreiten einer vordefinierten Anzahl an vom Fehlerzähler erfassten Abweichungen eine Abschalteinheit die Bearbeitung mit dem Bearbeitungswerkzeug unterbricht oder den Elektromotor abschaltet.

Weiter vorteilhaft ist es, wenn das Bearbeitungswerkzeug in einer Presse integriert ist. Die Vorrichtung nutzt ein 24V Ausgangssignal als Startsignal, welches von einer Steuerung erhalten wird. Der Ablauf des Gewindeformprozess wird nun über die Steuerung geregelt und Überwacht und nach Erreichen der Ausgangsposition ein 24V Bereitschaftssignal zur Pressen- oder Anlagensteuerung gegeben. Der Gewindeformprozess läuft dann folgendermaßen ab: Das Gewindeformwerkzeug steht in Startposition über dem Werkstück oder wird in diese Startposition bewegt. Nach Empfang des Startsignals beschleunigt der Servomotor und die Drehbewegung wird vorzugsweise über die Gelenkwelle zum Gewindeformerkopf übertragen. Durch das im Gewindeformerkopf angeordnete Winkelgetriebe wird die horizontale Drehbewegung in eine vertikale Drehbewegung umgewandelt. Die Übertragung der Drehbewegung kann aber auch auf andere geeignete Weise erfolgen, ohne dass die Idee der Erfindung dadurch verlassen wird. Das Gewindeformwerkzeug ist bevorzugt in einer Spindel montiert, diese Spindel wiederum ist in einer Gewindebuchse gelagert. Das Gewinde der Spindel und der Buchse weisen mit Vorteil die gleiche Gewindesteigung wie die des Gewindeformwerkzeugs auf. Somit wird mit der Drehbewegung gleichzeitig eine vertikale Bewegung ausgeführt und das Formwerkzeug bestimungsgemäß in das Kernloch des Werkstücks geführt. In der über eine Benutzerschnittstelle beeinflussbare Steuerung ist durch Eingabe der Anzahl der Umdrehungen (Gewindetiefe/Steigung) die Gewindetiefe definiert. Nach Erreichen der in der Steuerung eingegebenen Anzahl von Umdrehungen führt der Servomotor eine Drehrichtungsänderung aus, um das Gewindeformwerkzeug wieder aus dem Kernloch auszudrehen. Nach Erreichen der Ausgangsposition gibt die Steuerung das Bereitschaftssignal an die Pressen- oder Anlagensteuerung aus.

Der gesamte Gewindeformprozess wird von der Steuerung überwacht, d.h. bei über- oder unterschreiten eines zuvor ermittelten Drehmoments gibt die Steuerung ein Fehlersignal aus. Die Ermittlung des Drehmoments erfolgt erfindungesgemäß mit Hilfe der Stromaufnahme des Servomotors und der Auswertung in der Steuerung mit einem oberen und unteren Grenzwert (Sollwertbereich), welcher spezifisch einstellbar ist. Bevorzugt werden die Grenzwerte jedoch nach einem festgelegten Teach-Verfahren ermittelt.

Erfindungsgemäß ist vorgesehen, dass der Sollwertbereich ($I_{soll}$) in einem Teach-Modus dadurch ermittelt wird, dass eine Vielzahl N von Stromaufnahmen ($I_{Ist}$) an einem repräsentativen Bauteil erfasst und der Mittelwert ($I_M$) daraus ermittelt wird, sowie eine bauteilspezifische Standardabweichung σ vorgegeben oder ausgewählt wird, um ausgehend vom Mittelwert und der Standardabweichung σ den unteren und oberen Grenzwert ($I_{min}$) bzw. ($I_{max}$) des Sollwertbereich ($I_{soll}$) der Bearbeitungseinheit zu definieren.

Es ist mit Vorteil weiter vorgesehen, dass die Anzahl N' an zulässigen Abweichungen außerhalb des Sollwertbereichs ($I_{soll}$) über eine Benutzerschnittstelle einstellbar ist. Hierdurch wird gewährleistet, dass die Anlage nicht bereits jedes Mal bei einer Detektion einer Einzelabweichung abgeschaltet oder gestoppt wird. Ist zum Beispiel ein Gewindeschneider am Werkzeugkopf der Gewindeformeinheit gebrochen, so würde in Folge bei jeder Gewindeformung ein zu niedriges Drehmoment detektiert und sicher ein Werkzeugbruch detektiert werden können.

Ist hingegen einmalig eine Position ungenau angefahren oder ein Kernloch z. B. etwa zu klein gestanzt worden, so würde eine einmalige Abweichung den automatisierten Prozess nicht zum Abschalten bringen.

Ein weiterer Aspekt der vorliegenden Erfindung betrifft eine drehend antreibbare Bearbeitungseinheit vorzugsweise innerhalb einer Presse integriert und umfassend einen Elektromotor zum drehenden Antrieb der Bearbeitungseinheit mit einer Motorsteuerung umfassend ein Erfassungsmodul, welches die Stromabnahme des Elektromotors erfasst, zur Bestimmung des jeweils aktuellen Drehmomentes des Elektromotors und einer Abschalteinheit zum Abschalten des Elektromotors in Abhängigkeit von den von dem Erfassungsmodul erfassten Stromabnahmewerte.

In einer bevorzugten Ausführungsform der Erfindung ist vorgesehen, dass die Bearbeitungseinheit technische Mittel zur Durchführung des oben geschilderten Verfahrens aufweist.

Besonders vorteilhaft ist es, wenn als Elektromotor ein Servomotor verwendet wird und/oder wenn die Motorsteuerung eine SPS-Steuerung umfasst.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:

Fig.1  ein beispielhaftes Ausführungsbeispiel einer in einer Presse integrierten erfindungsgemäßen Gewindeformeinheit;

Fig.2  ein schematische Darstellung des erfindungsgemäßen Verfahrens und,

Fig.3  eine Drehmomentenhüllkurve.

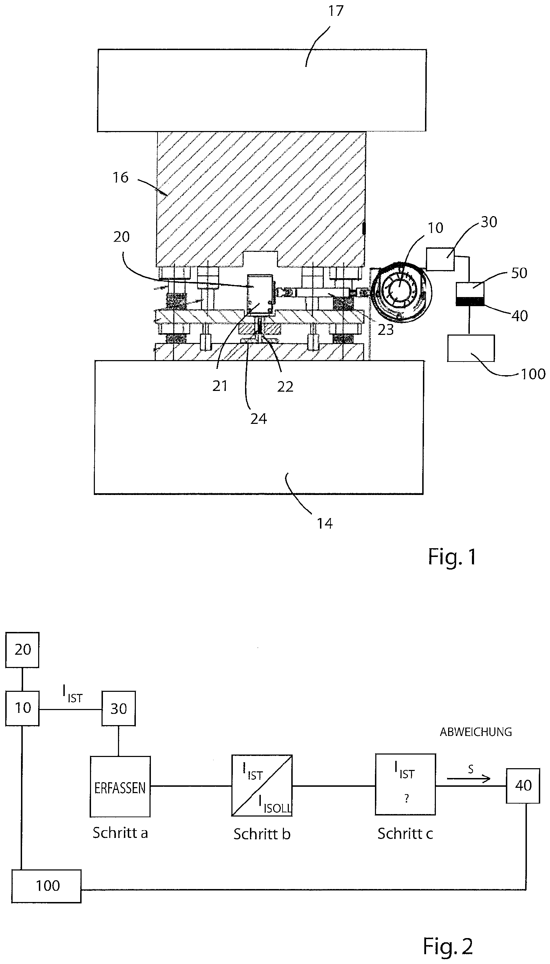

Im Folgenden wird die Erfindung anhand eines lediglich beispielhaften, jedoch nicht beschränkenden Ausführungsbeispiels mit Bezug auf die Figuren 1 bis 3 näher beschrieben. Gleiche Bezugszeichen weisen auf gleiche funktionale oder strukturelle Merkmale hin. Gezeigt ist mit Figur 1 eine Presse mit einer drehend antreibbaren Bearbeitungseinheit 20 umfassend einen Elektromotor 10 zum drehenden Antrieb der Bearbeitungseinheit 20 mit einer Motorsteuerung 100.

Die Bearbeitungseinheit 20 umfasst das Gewindeformwerkzeug 21 mit dem Formerkopf 22, der über eine Gelenkwelle 23, mit dem Motor (hier einem Servomotor 20) drehwirksam verbunden ist. Ferner ist ein Stanz- Umformteil 24 gezeigt. Die Presse weist ein Werkzeugoberteil 16 und ein Werkzeugunterteil 14, sowie Pressenstößel 17 auf.

Die Steuerung der Bearbeitungseinheit 20 umfasst ferner ein Erfassungsmodul 30, welches die Stromabnahme des Elektromotors 10 zur Bestimmung des jeweils aktuellen Drehmomentes des Elektromotors 10 erfasst. Ferner ist eine Abschalteinheit 50 zum Abschalten des Elektromotors 10 in Abhängigkeit von den von dem Erfassungsmodul 30 erfassten Stromabnahmewerte vorgesehen.

In der Figur 2 ist eine schematische Darstellung des erfindungsgemäßen Verfahrens gezeigt. Verfahren zur Prozessüberwachung einer über einen Elektromotor 10 antreibbaren drehenden Bearbeitungseinheit 20 mit den folgenden Schritten gezeigt:

Schritt a: Erfassen der zur Drehmomenterzeugung korrespondierende Stromaufnahme Iist (Ist-Werte) des Elektromotors 10 mittels wenigstens eines Erfassungsmoduls 30;

Schritt b: Vergleichen des erfassten Ist-Wertes Iist mit gespeicherten Soll-Werten $I_{min}$ bzw. $I_{max}$ eines Sollwertbereiches $I_{soll}$;

Schritt c: Feststellen ob der Ist-Wert Iist der Stromaufnahme ein zulässiger Wert aus dem Sollwertbereich $I_{soll}$ ist und

Schritt d: Ausgabe eines Signals S wenn eine Abweichung des Ist-Wert Iist festgestellt wird, um dadurch eine Drehmomentabweichung des drehenden Bearbeitungswerkzeuges 20 zu detektieren, wobei in einer vorteilhaften Ausgestaltung bei einer Abweichung ein entsprechendes Signal S in Schritt d) an einen Fehlerzähler 40 übertragen wird.

Bei Überschreiten einer vordefinierten Anzahl an vom Fehlerzähler 40 erfassten Abweichungen veranlasst die Abschalteinheit 50 die Bearbeitung mit dem Bearbeitungswerkzeug 20 zu unterbrechen oder den Elektromotor 10 abzuschalten.

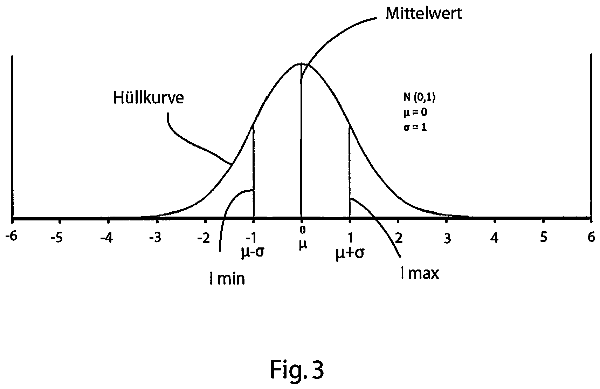

In Figur 3 ist eine Drehmomenthüllkurve gezeigt, die mittels eines Teach-Modus ermittelt wurde. Die Hüllkurve zeigt den zulässigen Sollwertbereich $I_{soll}$, der ermittelt wurde indem eine Vielzahl N von Stromaufnahmen $I_{ist}$ an einem repräsentativen Bauteil erfasst und der Mittelwert $\mu = I_M$ daraus ermittelt wird, sowie eine bauteilspezifische Standardabweichung $\sigma$ für die Stromgrenzen ermittelt wird, wobei eine Obergrenze und Untergenze ($I_{soll}$) für die Stromgrenzen wir folgt ermittelt wird:

$$I_{max} = \mu + n \cdot \sigma$$

$$I_{min} = \mu - n \cdot \sigma$$

Die beiden Stromgrenzwerte definieren demnach die maximal obere und untere Stromabnahme und damit das maximale und minimal zulässige Drehmoment. Die Anzahl an zulässigen Abweichungen außerhalb des Sollwertbereichs I$_{soll}$ über eine Benutzerschnittstelle einstellbar ist.

**Patentansprüche**

1. Verfahren zur Prozessüberwachung einer über einen Elektromotor (10) antreibbaren drehenden Bearbeitungseinheit (20) zur Bearbeitung eines Bauteils, wobei der Elektromotor (10) mit einer Motorsteuerung umfassend ein Erfassungsmodul ausgebildet ist, welches die Stromaufnahme des Elektromotors (10) zur Bestimmung des jeweils aktuellen Drehmomentes des Elektromotors (10) erfasst, mit den folgenden Schritten:

   a. Erfassen der zur Drehmomenterzeugung korrespondierenden Ist-Werte der Stromaufnahme (I$_{Ist}$) des Elektromotors (10) mittels des Erfassungsmoduls (30);
   b. Vergleichen des jeweiligen erfassten Ist-Wertes (I$_{Ist}$) mit gespeicherten Soll-Werten (I$_{min}$, I$_{max}$) eines Sollwertbereiches (I$_{soll}$), wobei der Sollwertbereich (I$_{soll}$) in einem Teach-Modus dadurch ermittelt wird, dass zuvor von dem Erfassungsmodul der Motorsteuerung eine Vielzahl N von Stromaufnahmen (I$_{Ist}$) des Elektromotors (10) bei der Bearbeitung mit der Bearbeitungseinheit (20) an einem solchen Bauteil erfasst und der Mittelwert (I$_M$) daraus ermittelt wurde, sowie eine bauteilspezifische Standardabweichung σ ermittelt wird, um ausgehend vom Mittelwert und der Standardabweichung σ den unteren und oberen Grenzwert (I$_{min}$) bzw. (I$_{max}$) des Sollwertbereich (I$_{soll}$) der Stromaufnahme der Bearbeitungseinheit (20) zu definieren ;
   c. Feststellen ob der Ist-Wert (I$_{Ist}$) der Stromaufnahme ein zulässiger Wert aus dem Sollwertbereich (I$_{soll}$) ist und
   d. Ausgabe eines Signals (S) wenn der Ist-Wert kein zulässiger Wert aus dem Sollwertbereich ist, um dadurch eine Drehmomentabweichung des drehenden Bearbeitungswerkzeuges (20) zu detektieren wobei bei einer Abweichung ein entsprechendes Signal (S) an einen Fehlerzähler (40) übertragen wird und bei Überschreiten einer vordefinierten Anzahl an vom Fehlerzähler (40) erfassten Abweichungen eine Abschalteinheit (50) die Bearbeitung mit dem Bearbeitungswerkzeug (20) unterbricht oder den Elektromotor (10) abschaltet.

2. Verfahren nach Anspruch 1, **dadurch gekennzeichnet, dass** die drehende Bearbeitungseinheit (20) eine Gewindeformeinheit ist.

3. Verfahren nach Anspruch 1 oder 2, **dadurch gekennzeichnet, dass** die vordefinierte Anzahl an zulässigen Abweichungen außerhalb des Sollwertbereichs (I$_{soll}$) über eine Benutzerschnittstelle einstellbar ist.

**Claims**

1. Method for process monitoring of a rotating machining unit (20), drivable by an electric motor (10), for machining a component, said electric motor (10) being formed with a motor controller comprising a detection module detecting the current consumption of the electric motor (10) for determining the respective current torque of the electric motor (10), comprising the following steps:

   a. Detection of the actual values of the current consumption (I$_{Ist}$) of the electric motor (10) corresponding to torque generation by means of the detection module (30);
   b. Comparing the respective detected actual value (I$_{Ist}$) with stored target values (I$_{min}$, I$_{max}$) of a target value range (I$_{soll}$), the target value range (I$_{soll}$) being determined in a teach mode by means of a multiplicity N of current consumption (I$_{Ist}$) of the electric motor (10) was previously detected by the detection module of the motor control during machining with the machining unit (20) on such a component and the mean value (I$_M$) was determined therefrom, and a component-specific standard deviation σ is determined in order to calculate the lower and upper limit value (I$_{min}$) respectively (I$_{max}$) of the target value range (I$_{soll}$) of the current consumption of the machining unit (20);
   c. Determining whether the actual value (I$_{Ist}$) of the current consumption is a permissible value from the target value range (I$_{soll}$) and
   d. Outputting of a signal (S) if the actual value is not a permissible value from the target value range, in order to thereby detect a torque deviation of the rotating machining tool (20), wherein, in the event of a deviation, a corresponding signal (S) is transmitted to an error counter (40) and, if a predefined number of deviations detected by the error counter (40) is exceeded, a switch-off unit (50) interrupts machining with the machining tool (20) or switches off the electric motor (10).

2. Method according to claim 1, **characterized in that** the rotating machining unit (20) is a thread-forming unit.

3. Method according to claim 1 or 2, **characterized in that** the predefined number of permissible deviations outside the target value range ($I_{soll}$) can be set via a user interface.

**Revendications**

1. Procédé de surveillance de processus d'une unité d'usinage rotative (20) actionnable par un moteur électrique (10), destiné à usiner un composant, ledit moteur électrique (10) étant formé avec un contrôleur de moteur comprenant un module de détection détectant la consommation de courant de le moteur électrique (10) pour déterminer le couple de courant respectif du moteur électrique (10), comprenant les étapes suivantes :

    a. Détection des valeurs réelles de la consommation de courant ($I_{Ist}$) du moteur électrique (10) correspondant à la génération de couple au moyen du module de détection (30) ;
    b. Comparer la valeur réelle détectée respective ($I_{Ist}$) avec les valeurs cibles stockées ($I_{min}$, $I_{max}$) d'une plage de valeurs cibles ($I_{Ist}$) la plage de valeurs cibles ($I_{soll}$) étant déterminée dans un mode apprentissage au moyen d'une multiplicité N de consommation de courant ($I_{Ist}$) du moteur électrique (10) a déjà été détecté par le module de détection de la commande de moteur pendant l'usinage avec l'unité d'usinage (20) sur un tel composant et la valeur moyenne ($I_M$) en a été déterminée, et une norme spécifique au composant la déviation σ est déterminée afin de calculer les valeurs limites inférieure et supérieure ($I_{min}$) respectivement ($I_{max}$) de la plage de valeurs cibles ($I_{soll}$) de la consommation de courant de l'unité d'usinage (20) ;
    c. Déterminer si la valeur réelle ($I_{Ist}$) de la consommation actuelle est une valeur admissible dans la plage de valeurs cibles ($I_{soll}$) et
    d. l'émission d'un signal (S) si la valeur réelle n'est pas une valeur admissible de la plage de valeurs cibles, afin de détecter ainsi un écart de couple de l'outil d'usinage rotatif (20), dans lequel, en cas d'écart, un signal (S) est transmis à un compteur d'erreurs (40) et, si un nombre prédéfini d'écarts détectés par le compteur d'erreurs (40) est dépassé, une unité d'arrêt (50) interrompt l'usinage avec l'outil d'usinage (20) ou arrête le moteur électrique (10).

2. Procédé selon la revendication 1, **caractérisé en ce que** l'unité d'usinage rotative (20) est une unité de formation de filetage.

3. Procédé selon la revendication 1 ou 2, **caractérisé en ce que** le nombre prédéfini de déviations admissibles en dehors de la plage de valeurs cibles ($I_{soll}$) peut être défini via une interface utilisateur.

Fig. 1

Fig. 2

Fig. 3

**IN DER BESCHREIBUNG AUFGEFÜHRTE DOKUMENTE**

**In der Beschreibung aufgeführte Patentdokumente**

- DE 102008047073
- DE 102013108170 B3
- EP 1276027 A
- DE 19729263 A1